(19) Europäisches Patentamt
European Patent Office
Office européen des brevets

(11) **EP 1 548 181 B1**

(12) **EUROPEAN PATENT SPECIFICATION**

(45) Date of publication and mention
of the grant of the patent:
**09.06.2010 Bulletin 2010/23**

(51) Int Cl.:
***D06N 7/00*** *(2006.01)*       ***E04F 15/16*** *(2006.01)*
***B60N 3/04*** *(2006.01)*       ***A47G 27/04*** *(2006.01)*

(21) Application number: **03797717.0**

(22) Date of filing: **19.09.2003**

(86) International application number:
**PCT/JP2003/012036**

(87) International publication number:
**WO 2004/027142 (01.04.2004 Gazette 2004/14)**

(54) **FREE LAYING FLOOR TILE HAVING PVC BASED BACKING MATERIAL FOR PREVENTING TILE FROM SLIPPING PROVIDED ON BACK SURFACE THEREOF**

LOSE BODENFLIESE MIT RUTSCHFESTEM TRÄGERMATERIAL AUF PVC-BASIS

DALLES DE PLANCHER A POSE LIBRE

(84) Designated Contracting States:
**AT BE BG CH CY CZ DE DK EE ES FI FR GB GR HU IE IT LI LU MC NL PT RO SE SI SK TR**

(30) Priority: **20.09.2002 JP 2002276034**

(43) Date of publication of application:
**29.06.2005 Bulletin 2005/26**

(73) Proprietors:
• **Tajima Incorporated**
**Tokyo 120-8526 (JP)**
• **Shinkokasei Co., Ltd.**
**Hanyu-shi,**
**Saitama 348-0017 (JP)**

(72) Inventors:
• **SUZUKI, Naoyuki**
**Ageo-shi, Saitama 362-0021 (JP)**

• **PAN, Qingyang,**
**c/o TAJIMA INCORPORATED**
**Tokyo 120-8526 (JP)**
• **ISHIYAMA, Seishiro,**
**c/o TAJIMA INCORPORATED**
**Tokyo 120-8526 (JP)**

(74) Representative: **Gille Hrabal Struck Neidlein Prop Roos**
**Patentanwälte**
**Brucknerstrasse 20**
**40593 Düsseldorf (DE)**

(56) References cited:
WO-A-93/13169          DE-A1- 2 405 095
GB-A- 1 399 191        JP-A- 2000 108 753
JP-A- 2000 135 736     JP-A- 2001 029 211
US-A1- 2002 142 135

**Description**

TECHNICAL FIELD

The present invention relates to a loose-lay floor tile which has on the back face a nonskid backing material using a polyvinyl chloride-based raw material ("polyvinyl chloride" will be referred to as "PVC", hereinafter). Such floor-tiles are shown in JP 200135736, DE 24 05 095 or WO 93/13169 e.g..

BACKGROUND ART

As the material for providing the nonskid property to a loose-lay floor tile, mechanically foamed materials containing an emulsion of an acrylic resin as the main component (referred to as "acrylic mechanically foamed materials, hereinafter) are conventionally used. The production of the above material has been studied, and the properties of the material have been evaluated. The results of the study and the evaluation show that the above material has the following drawbacks (a) to (d):

(a) Markedly great water absorption
Water is absorbed through joints during maintenance.
Water is absorbed during washing for recycling.
Water in a moist ground coat is absorbed.
(b) Poor resistance to water
Strength decreases after being dipped into water for one week or longer.
(c) Poor resistance to alkali
Strength markedly decreases when the material is dipped into a 2% aqueous solution of sodium hydroxide.
(d) Small strength of a foamed material

The strength is one-third or smaller of a PVC-based mechanically foamed material described later when the expansion rate is the same.

When sheets of the material are packaged and stored for a long time in the condition such that adhesive faces of the sheets are faced to each other, separation of the sheets becomes difficult, and the sheets of the foamed material are occasionally fractured when the sheets are forced to be separated.

Therefore, it is inevitable that the quality of the acrylic mechanically foamed materials remains unreliable when tiles having the material are used by directly laying on a floor.

The present invention has an object of providing a loose-lay floor tile which has on the back face a nonskid backing material prepared by using a PVC-based raw material in place of an acrylic mechanically foamed material.

DISCLOSURE OF THE INVENTION

As the result of intensive studies by the present inventors to achieve the above object, it was found that the drawbacks of the acrylic mechanically foamed materials could be overcome with a loose-lay floor tile which has on the back face a nonskid backing material obtained by solidifying a paste sol comprising a plasticizer and a polyvinyl chloride-based resin.

The present invention provides:

(1) A loose-lay floor tile which has on a back face a nonskid backing material obtained by solidifying a paste sol comprising a plasticizer and at least one polyvinyl chloride-based resin selected from the group consisting of a polyvinyl chloride, a copolymer of vinyl chloride and vinyl acetate and a mixture of polyvinyl chloride and polyvinyl acetate,
wherein the paste sol further comprises a foam stabilizer of a hydrophobic type, and a foamed material obtained by mechanically foaming and then solidifying the paste sol is disposed on the back face of the tile. The foamed material has an expansion rate of 1.5 to 4.
(2) A loose-lay floor tile described in (1) or (2), wherein the polyvinyl chloride-based resin is a copolymer of vinyl chloride and vinyl acetate which comprises about 3 to 10% by mole of vinyl acetate as a monomer unit;
(3) A loose-lay floor tile described in (1) or (2), wherein the polyvinyl chloride-based resin is a mixture of polyvinyl chloride and polyvinyl acetate comprising about 1.5 to 5% by weight of polyvinyl acetate;
(4) A loose-lay floor tile described in any one of (1) to (4), wherein the plasticizer is a phthalic acid-based plasticizer;
(5) A loose-lay floor tile described in (5), wherein a content of the phthalic acid-based plasticizer is about 50 to 200 parts by weight per 100 parts by weight of the polyvinyl chloride-based resin; and

BRIEF DESCRIPTION OF THE DRAWINGS

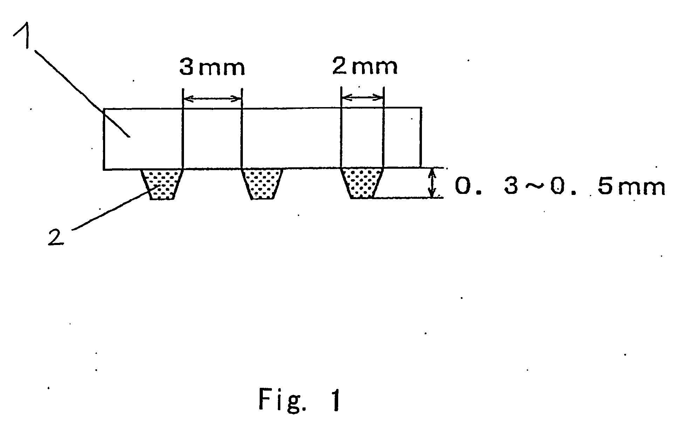

Figure 1 shows a sectional view of a loose-lay floor tile (1) which has a nonskid backing material (2) on the back face of the floor tile as stripes.

THE MOST PREFERRED EMBODIMENT TO CARRY OUT THE INVENTION

The present invention will be described more specifically in the following.

To provide the "nonskid property" necessary for the nonskid backing material, the following points 1) to 3) must be considered.

1) The backing material must be a flexible elastomer.
Examples of the above material include elastomers having an elongation of 300% or greater.
2) A foamed material is preferable to a non-foamed material from the standpoint of the flexibility.
Examples of the above material include foamed materials based on acrylic materials, urethanes and PVC.
3) A material having a suitable tackiness must be selected since separation of sheets of the material having excessively great tackiness becomes difficult when the sheets are packaged and stored for a long time in the condition such that adhesive faces of the sheets are faced to each other although the greater the tackiness of the material, the greater the adhesive effect.

Examples of the above material include adhesive coating materials curable with ultraviolet ray and conventional products coated with adhesives.

The above points of consideration have been studied by the present inventors, and the result of the study shows that, when a material comprising PVC is used, the above points of consideration 1) and 2) can be satisfied, the drawbacks of acrylic mechanically foamed materials, i.e., the great absorption of water, poor resistances to water and alkali and small strength of the foamed material, can be improved, and advantages are exhibited on the productivity and production facilities.

When an acrylic mechanically foamed material is used, at least 20 minutes at 140°C is required for drying and curing, and an apparatus for the drying step (such as a long drying oven with the hot air) is necessary for improving the productivity. In contrast, when a PVC mechanically foamed material is used, "heating using an infra-heater (heating with far infrared ray)" or "Schwank heating (heating using a gas burner)" can be used, and the curing can be achieved in ten and several seconds. Moreover, PVC is more resistant to alkali than acrylic resins, and strength of a PVC-based mechanically foamed material is three times or more as great as that of acrylic mechanically foamed materials when the expansion rate is the same.

With respect to the point of consideration 3), it is found to be effective that not the tackiness of an adhesive but the working mechanism that slippage is prevented by the combination of the friction coefficient with the ground coat surely kept at a specific value and the absorption of stress by deformation of the backing material (the working mechanism that the stress in the direction of slippage is absorbed by friction and deformation) is utilized.

In the practical application, the PVC paste is foamed mechanically, and the foamed paste is solidified and used. To satisfy the above points of consideration and the requirements on the productivity and the properties in relation to the ground coat such as mortar, it is preferable that foam stabilizers, thixotropy agents, stabilizers, fillers and flame retardants are added, where necessary, in combination with the resin and the plasticizer which are the main components of the paste.

Although the polyvinyl chloride resin as the main component of the PVC paste may be a polymer comprising the vinyl chloride unit alone, it is preferable that a copolymer of vinyl chloride and vinyl acetate or a mixture of PVC and polyvinyl acetate is used since curing can be conducted at a low temperature and the productivity is improved. When the copolymer of vinyl chloride and vinyl acetate is used, it is preferable that the content of vinyl acetate in the copolymer is about 3 to 10% by mole and more preferably about 5 to 8% by mole as the monomer unit. A commercial material containing vinyl acetate in the above range may be used. When a mixture of PVC and polyvinyl acetate is used, the content of polyvinyl acetate is about 1.5 to 5% by weight and more preferably about 2 to 3% by weight. When the content of polyvinyl acetate is smaller than about 1.5% by weight, workability is insufficient, and there is the possibility that the desired strength is not obtained. When the content of polyvinyl acetate exceeds about 5% by weight, heat stability during working decreases.

The plasticizer is used in an amount of about 50 to 200 parts by weight and preferably about 80 to 120 parts by weight per 100 parts by weight of the resin. When the amount of the plasticizer is less than about 50 parts by weight, flexibility of the obtained material is insufficient, and there is the possibility that an excellent foamed material is not obtained. When the amount of the plasticizer exceeds about 200 parts by weight, the obtained material is excessively flexible, and there is the possibility that strength of the backing material is small. As the plasticizer, phthalic ester-based plasticizers such as di-2-ethylhexyl phthalate (DOP) and diisononyl phthalate (DINP) are preferable, and DOP is more preferable for the PVC-based mechanically foamed material.

The foaming stabilizer is used when the material is mechanically foamed. It is preferable that a silicone-based surfactant of the hydrophobic type is used as the foaming stabilizer so that the water-repelling property is also exhibited and penetration of water into the foamed material is prevented. It is preferable that the foaming stabilizer is used in an amount of 5% by weight or less. However, it is necessary that at least 3% by weight of the foaming stabilizer be used when the expansion rate of the foamed material is 3 or greater.

For the PVC-based mechanically foamed material, the expansion rate is about 1.5 to 4 and preferably about 2.5 to 3. When the expansion rate exceeds about 4, the material shows marked shrinking during curing by heating, and there is the possibility that workability in coating decreases during application of the foamed sol at a speed of coating of 10 m/minute or greater (the sol does not extend smoothly due to the great expansion rate, i.e., due to a great viscosity). When the expansion rate is smaller than about 1.5, there is the possibility that the sufficient nonskid property is not exhibited. The foamed material is preferable to a non-foamed material due to the more excellent nonskid property. In the present invention, the expansion rate is defined as follows:

$$\text{Expansion rate} = (\text{Density of a material before being foamed}) / (\text{Density of the material after being foamed})$$

Foamed PVC includes the mechanically foamed material described above and chemically foamed materials which are obtained by chemical foaming. When a foamed PVC is used as the backing material, the PVC-based mechanically foamed material is preferable since the chemically foamed materials have the following drawbacks (i) to (iv):

(i) A high temperature of 200°C or higher is necessary for the chemical foaming, and the floor tile itself is damaged by the high temperature.
(ii) Controlling the thickness of the foamed material is difficult.
(iii) A heating apparatus of the direct heating type cannot be used, and the heated air must be used. Therefore, the heating apparatus becomes great and complicated.
(iv) It is difficult that the foaming is controlled and fine cells are formed.

The thixotropy agent is used when the plasticizer is used in a great amount or for improving the coating property of the material and preventing flow and deformation of the material applied to the back face. Examples of the thixotropy agent include modified urea solutions. Although the greater the amount of the thixotropy agent, the better for this purpose, an excessively great amount causes a marked increase in the viscosity of the sol and is not practical. Therefore, the amount is about 3.0% by weight or less and preferably about 1.5% by weight or less.

As the stabilizer, the filler and the flame retardant, conventional stabilizers, fillers and flame retardants can be used.

EXAMPLES

The present invention will be described more specifically with reference to examples in the following. However, the present invention is not limited to the examples.

Example 1

A nonskid backing material in accordance with the present invention was prepared by mixing the following components, followed by mechanically foaming the resultant mixture (the expansion rate: 2.8). As for the amount of the component, "part" means "part by weight".

| | |
|---|---|
| A paste of a PVC resin | 80 parts |
| (a copolymer containing 7% by mole of vinyl acetate; the number-average molecular weight: 1,700) | |
| A PVC resin for blending | 20 parts |
| (a copolymer containing 5% by mole of vinyl acetate; the number-average molecular weight: 1,100) | |
| A plasticizer (DOP) | 120 parts |
| Calcium carbonate treated with fatty acids on the surface | 10 parts |

(continued)

| | |
|---|---|
| A silicone-based foam stabilizer | 7 parts |
| A modified urea-based thixotropy agent | 0.2 parts |

On the back face of one loose-lay floor tile which had a size of a 50 cm square and a thickness of 5 mm and made of a plastic, stripes were formed with 50 g of the nonskid backing material prepared above. The floor tile having the backing material was heated by an infra-heater at 165°C for 5 seconds to solidify the backing material. The sectional view of the obtained floor tile is shown in Figure 1. The height of the stripe of the nonskid backing material was 0.3 to 0.5 mm, and the width of the stripe on the face of the floor tile was about 2 mm. The distance between the stripes of the nonskid backing material was about 3 mm.

The coefficient of slipping resistance [the C. S. R. value = maximum pulling force / applied weight (80 kg)] was measured in accordance with the method of Japanese Industrial Standard A 1454 using the obtained floor tile having the backing material and the floor tile without the backing material (the control). The results of the measurement are shown in Table 1.

Comparative Example 1

A nonskid backing material was prepared by adding 2 parts by weight of a crosslinking agent "CR-5L" manufactured by E-TEC Co., Ltd. to 100 parts by weight of a nonskid backing material which was a mechanically foamed material prepared by using a commercial acrylic emulsion [manufactured by E-TEC Co., Ltd.; ACRYL EMULSION "A-412A"].

On the back face of one loose-lay floor tile which had a size of a 50 cm square and a thickness of 5 mm and made of a plastic, stripes were formed with 50 g of the nonskid backing material prepared above in the same manner as that in Example 1. The floor tile having the backing material was heated in a drying oven at 150°C for 1 minute to solidify the

backing material.

The C. S. R. value was measured in accordance with the same method as that used in Example 1 using the obtained floor tile having the backing material. The results of the measurement are shown in Table 1.

It is shown by the results in Table 1 that the mechanically foamed nonskid floor tile of Example 1 exhibited the same slipping resistance as that of the mechanically foamed floor tile of Comparative Example 1 prepared by using an acrylic emulsion.

The nonskid backing materials used in Example 1 and Comparative Example 1 were each mechanically foamed, applied each to a glass plate of a 500 mm square and solidified by heating in a drying oven at 165°C for 5 minutes, and sheets of the mechanically foamed materials having a thickness of about 1 mm were prepared. The obtained foamed sheets were separated from the glass plates, and test pieces necessary for the following evaluations were cut out from the sheets. Using the obtained test pieces, properties of the nonskid backing materials were evaluated.

(1) Water absorption

A test piece having a size of 40 mm x 100 mm was dipped into warm water at 46°C, and the water absorption was measured after 1 minute, 1 hour and 24 hours. The water absorption was calculated from the weights of the test piece before and after the dipping in accordance with the following equation:

$$\text{Water absorption(\%)} = 100 \times (\text{weight of test piece after dipping} - \text{weight of test piece before dipping})/(\text{weight of test piece before dipping})$$

The results of the measurement of the water absorption are shown in Table 1.

As shown in Table 1, the PVC-based mechanically foamed material in accordance with the present invention absorbed almost no water. In contrast, the mechanically foamed material of Comparative Example 1 prepared by using an acrylic emulsion rapidly absorbed water immediately after being dipped into water, and the water absorption reached 172% after 1 minute.

(2) Resistance to alkali

A test piece prepared by cutting out into the shape of the No. 3 dumbbell defined in Japanese Industrial Standard K-6301 was dipped into a 2% aqueous solution of sodium hydroxide. The tensile strength and the elongation at break were measured after one week and two weeks in accordance with the method of Japanese Industrial Standard A-6008 at a temperature of 20°C and a speed of extension of 200 mm/minute. The results are shown in Table 1.

As shown in Table 1, almost no effects of the alkali were found on the PVC-based mechanically foamed material in accordance with the present invention. In contrast, the mechanically foamed material of Comparative Example 1 prepared by using an acrylic emulsion had an initial strength which was one third as small as that of the PVC-based mechanically foamed material in accordance with the present invention. Moreover, after being dipped into the alkali for 2 weeks, the mechanically foamed material of Comparative Example 1 was swollen to a volume twice as much as that of the initial volume, and the strength and the elongation at break decreased to zero.

It is shown by the above results that the nonskid backing material in accordance with the present invention prepared by using the PVC-based raw material exhibited smaller water absorption, more excellent resistance to alkali and greater strength of the foamed material than those of conventional mechanically foamed materials prepared by using an acrylic emulsion, the same coefficient of slipping resistance (the C. S. R. value) as that of the conventional mechanically foamed materials and excellent properties as the backing material for floor tiles used by simply laying on a floor.

Table 1

| | C.R.S. value | Water absorption, %, after | | | Resistance to alkali, N/mm$^2$ (elongation, %), after | | | Strength of foamed material, tensile strength, N/mm$^2$ |
|---|---|---|---|---|---|---|---|---|
| | | 1 min. | 1 hour | 24 hours | initial | 1 week | 2 weeks | |
| Example 1 | 0.75 | 0.9 | 2.5 | 18.8 | 0.35 (130) | 0.57 (140) | 0.45 (140) | 0.35 |
| Comparative Example 1 | 0.75 | 172 | 186 | 200 | 0.13 (250) | 0 (80) | 0 (0) Note | 0.13 |
| Control | 0.51 | - | - | - | - | - | - | - |

Note: The test piece was swollen to a volume twice as much as the initial volume.

INDUSTRIAL APPLICABILITY

In accordance with the present invention, the nonskid backing material exhibiting more excellent water-repelling property, resistance to alkali and resistance to moisture, water and alkaline water from the ground coat than those of mechanically foamed materials containing an acrylic emulsion as the main component can be provided. The backing material which provides a foamed material exhibiting a great strength and can bear ordinary dynamic loads can be provided.

**Claims**

**1.** A loose-lay floor tile (1) which has on a back face a nonskid backing material (2) **characterized in that** said backing material (2) comprises a mechanically foamed and solidified material having an expansion rate of about 1.5 to 4 of a paste sol comprising a plasticizer, a hydrophobic foam stabilizer and at least one polyvinyl chloride-based resin selected from the group consisting of a polyvinyl chloride, a copolymer of vinyl chloride and vinyl acetate and a mixture of polyvinyl chloride and polyvinyl acetate.

**2.** A loose-lay floor tile (1) according to Claim 1, wherein the polyvinyl chloride-based resin is a copolymer of vinyl chloride and vinyl acetate which comprises about 3 to 10% by mole of vinyl acetate as a monomer unit.

3. A loose-lay floor tile (1) according to Claim 1, wherein the polyvinyl chloride-based resin is a mixture of polyvinyl chloride and polyvinyl acetate comprising about 1.5 to 5% by weight of polyvinyl acetate.

4. A loose-lay floor tile (1) according to any one of Claims 1 to 3, wherein the plasticizer is a phthalic acid-based plasticizer.

5. A loose-lay floor tile (1) according to Claim 4, wherein a content of the phthalic acid-based plasticizer is about 50 to 200 parts by weight per 100 parts by weight of the polyvinyl chloride-based resin.

## Patentansprüche

1. Lose verlegte Bodenfliese (1), die auf der Rückseite ein rutschfestes Trägermaterial (2) aufweist, **dadurch charakterisiert, dass** das Trägermaterial (2) umfasst: ein mechanisch geschäumtes und verfestigtes Material mit einer Expansionsrate von etwa 1,5 bis 4 aus einem Pastensol, umfassend einen Weichmacher, einen hydrophoben Schaumstabilisator und mindestens ein Harz auf Polyvinylchloridbasis, ausgewählt aus der aus einem Polyvinylchlorid, einem Copolymer von Vinylchlorid und Vinylacetat und einem Gemisch von Polyvinylchlorid und Polyvinylacetat bestehenden Gruppe,

2. Lose verlegte Bodenfliese (1) nach Anspruch 1 , wobei das Harz auf Polyvinylchloridbasis ein Copolymer aus Vinylchlorid und Vinylacetat ist, das etwa 3 bis 10 Mol-% Vinylacetat als Monomereinheit umfasst.

3. Lose verlegte Bodenfliese (1) nach Anspruch 1 , wobei das Harz auf Polyvinylchloridbasis ein Gemisch aus Polyvinylchlorid und Polyvinylacetat ist, das etwa 1,5 bis 5 Gew.-% Polyvinylacetat umfasst,

4. Lose verlegte Bodenfliese (1) nach einem der Ansprüche 1 bis 3, wobei der Weichmacher ein Weichmacher auf Phthalsäurebasis ist,

5. Lose verlegte Bodenfliese (1) nach Anspruch 4, wobei der Anteil des Weichmachers auf Phthalsäurebasis etwa 50 bis 200 Gewichtsteile pro 100 Gewichtsteile des Harzes auf Polyvinylchloridbasis beträgt.

## Revendications

1. Dalle simplement posée (1) qui possède, sur une face dorsale, une matière de support antidérapante (2), **caractérisée en ce que** ladite matière de support (2) comprend une matière transformée en mousse et solidifiée par voie mécanique possédant un taux d'expansion d'environ 1,5 à 4 d'un sol de collage comprenant un plastifiant, un stabilisateur en mousse hydrophobe et au moins une résine à base de chlorure de polyvinyle, choisie parmi le groupe constitué par du chlorure de polyvinyle, un copolymère de chlorure de vinyle et d'acétate de vinyle et un mélange de chlorure de polyvinyle et d'acétate de polyvinyle.

2. Dalle simplement posée (1) selon la revendication 1, dans laquelle la résine à base de chlorure de polyvinyle est un copolymère de chlorure de vinyle et d'acétate de vinyle qui comprend de l'acétate de vinyle, à concurrence d'environ 3 à 10 mol %, à titre d'unité monomère.

3. Dalle simplement posée (1) selon la revendication 1, dans laquelle la résine à base de chlorure de polyvinyle est un mélange de chlorure de polyvinyle et d'acétate de polyvinyle comprenant de l'acétate de polyvinyle à concurrence d'environ 1,5 à 5 % en poids.

4. Dalle simplement posée (1) selon l'une quelconque des revendications 1 à 3, dans laquelle le plastifiant est un plastifiant à base d'acide phtalique.

5. Dalle simplement posée (1) selon la revendication 4, dans laquelle la teneur du plastifiant à base d'acide phtalique s'élève d'environ 50 à 200 parties en poids par 100 parties en poids de la résine à base de chlorure de polyvinyle.

Fig. 1

**EP 1 548 181 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 200135736 B
- DE 2405095
- WO 9313169 A